# EUROPÄISCHE PATENTSCHRIFT

(11) **EP 1 046 334 B1**
(45) Veröffentlichungstag und Bekanntmachung des Hinweises auf die Patenterteilung: **20.08.2003**
(21) Anmeldenummer: 00108308.8
(22) Anmeldetag: 15.04.2000
(51) Int. Cl.: A01D 69/00

(54) **Antriebseinrichtung der Förder- und/oder Gutbearbeitungsvorrichtung einer Erntemaschine**
Drive device for the conveyor and/or the crop treatment device
Dispositif d'entraînement du convoyeur et/ou du dispositif de traitement de récolte

(30) Priorität: 23.04.1999 DE 19918550
(43) Veröffentlichungstag der Anmeldung: 25.10.2000
(73) Patentinhaber: DEERE & COMPANY, Moline, Illinois 61265-8098 (US)
(72) Erfinder: Becker, Klaus, East Moline, IL 61244 (US); Kempf, Bernd, 66484 Althornbach (DE); Weissig, Jörg, 66121 Saarbrücken (DE)
(74) Vertreter: Holst, Sönke, Dr.

(56) Entgegenhaltungen:
- EP-A- 0 680 687
- DE-A- 2 819 200
- DE-A- 3 708 550
- US-A- 5 778 644
- US-A- 5 791 128

## Beschreibung

Die Erfindung betrifft eine Antriebseinrichtung einer Förderund/oder Gutbearbeitungsvorrichtung einer Erntemaschine, mit: einem Hauptantriebsmotor, insbesondere einem Verbrennungsmotor, der eingerichtet ist, die Förder- und/oder Gutbearbeitungsvorrichtung über Kraftübertragungselemente in einer ersten Betriebsart in einer ersten Richtung mit einer ersten Geschwindigkeit anzutreiben, und einem Reversiermotor, der eingerichtet ist, die Förder- und/oder Gutbearbeitungsvorrichtung in einer zweiten Betriebsart mit einer zweiten Geschwindigkeit in einer zweiten Richtung, die sich von der ersten Richtung unterscheidet, anzutreiben.

Eine Antriebseinrichtung gattungsgemäßer Art ist aus der DE 37 08 550 A bekannt geworden. Bei einem Mähdrescher wird ein Reversiermotor in normalem Erntebetrieb mechanisch angetrieben und er wirkt als Pumpe und treibt einen Antriebsmotor für eine Haspel hydraulisch an. Auch der Schrägförderer wird im normalen Erntebetrieb mechanisch angetrieben. Im Reversierbetrieb wird der Reversiermotor und der Antriebsmotor der Haspel hydraulisch angetrieben, so daß die von diesen Motoren getriebenen Einzugsorgane in umgekehrter Richtung bewegt werden, um verstopftes Erntegut aus dem Mähdrescher herauszuführen.

Die EP 680 687 A offenbart einen Feldhäcksler und einen Mähdrescher mit einem ähnlichen Antrieb der Einzugsorgane.

Im Stand der Technik ist nur ein normaler Erntebetrieb und ein Reversierbetrieb vorgesehen.

Das der Erfindung zugrunde liegende Problem wird darin gesehen, daß die bekannten Betriebsarten der Antriebseinrichtungen der Einzugsorgane nicht in allen Fällen hinreichend sind.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird also eine dritte und eine vierte Betriebsart vorgeschlagen. Die Antriebseinrichtung kann somit zusätzlich zur ersten Betriebsart (normaler Erntebetrieb, in der die Förder- und/oder Gutbearbeitungsvorrichtung durch den Hauptantriebsmotor, insbesondere einen Verbrennungsmotor angetrieben wird) und zweiten Betriebsart (Reversieren mittels des Reversiermotors) auf andere Weise betrieben werden. In Ausführungsformen der Erfindung kann nur die dritte oder vierte Betriebsart zusätzlich zur ersten und zweiten Betriebsart bereitgestellt werden, bevorzugt ist jedoch, sowohl die dritte als auch die vierte Betriebsart zu ermöglichen. Selbstredend können die genannten Betriebsarten nur nacheinander, nicht gleichzeitig zur Anwendung kommen. Im konkreten wird in der dritten Betriebsart die Förder- und/oder Gutbearbeitungsvorrichtung in der Richtung angetrieben, in die sie auch in normalem Erntebetrieb (also der ersten Betriebsart) angetrieben wird, jedoch demgegenüber mit einer verringerten Geschwindigkeit. Diese Betriebsart eignet sich insbesondere, um nach einer Verstopfung eine größere Menge Erntegut langsam in die Erntemaschine einzuführen. Die vierte Betriebsart ist ein Notstop, bei dem der Verbrennungsmotor antriebsmäßig von der Förder- und/oder Gutbearbeitungsvorrichtung abgekoppelt ist. Sie kann durch einen Notstopknopf aktiviert werden. Um die kinetische Energie der Förder- und/oder Gutbearbeitungsvorrichtung möglichst schnell abzubauen, wird der Reversiermotor als Bremse verwendet. Die vierte Betriebsart ermöglicht daher insbesondere im Notfall ein schnelles Anhalten der Förder- und/oder Gutbearbeitungsvorrichtung. Eine zusätzliche Bremse ist nicht nötig.

Auf diese Weise werden zusätzliche, nützliche Betriebsarten der Antriebseinrichtung der Förder- und/oder Gutbearbeitungsvorrichtung bereitgestellt.

Der Reversiermotor ist vorteilhafterweise nicht nur in der zweiten, dritten und/oder vierten, sondern auch in der ersten Betriebsart antriebsmäßig mit der Förder- und/oder Gutbearbeitungsvorrichtung verbunden. Der Vorzug liegt darin, daß in der vierten Betriebsart, in die aus der ersten Betriebsart im Falle eines Notstops unmittelbar und schnell übergegangen werden soll, kein zeitraubendes Einkuppeln oder dergleichen des Reversiermotors mehr nötig ist. Außerdem kann in dieser Ausführungsform der Reversiermotor, falls er ein Hydraulikmotor ist, in der ersten Betriebsart als Pumpe eingesetzt werden, und der erzeugte Öldruck zum Antrieb eines zweiten Hydraulikmotors dienen. Die Geschwindigkeit des zweiten Hydraulikmotors ist vorzugsweise veränderbar; dazu kann ein parallel oder in Reihe mit ihm geschaltetes, verstellbares Drosselventil dienen. Die Verstellung kann mechanisch, elektromotorisch oder hydraulisch von der Fahrerkabine aus erfolgen. Es wäre auch denkbar, einen Elektromotor als Reversiermotor zu verwenden, und die in der vierten Betriebsart von ihm erzeugte EMK in einem Widerstand in Wärme umzuwandeln.

Zweckmäßigerweise ist die Förder- und/oder Gutbearbeitungsvorrichtung in der zweiten und dritten Betriebsart antriebsmäßig vom Verbrennungsmotor getrennt. In diesen Betriebsarten treibt somit allein der Reversiermotor die Förder- und/oder Gutbearbeitungsvorrichtung an. Die antriebsmäßige Trennung kann in an sich bekannter Weise durch eine Elektrokupplung erfolgen, die in einer Riemenscheibe angeordnet ist, oder durch einen Treibriemen, dessen Spannung durch eine hydraulisch verstellbare Spannrolle variierbar ist, wie in der EP 680 687 A beschrieben ist, deren Inhalt durch Verweis hierin aufgenommen wird.

Wie bereits beschrieben, dient in der vierten Betriebsart der Reversiermotor als Bremse für die Förder- und/oder Gutbearbeitungsvorrichtung. Dazu ist der vom Reversiermotor, der als Pumpe verwendet wird, erzeugte Öldruck abzubauen und in Wärme umzuwandeln. Es wird daher vorgeschlagen, den vom Reversiermotor in der vierten Betriebsart erzeugten Öldruck über ein Ventil, insbesondere ein Druckbegrenzerventil abzuleiten. Zusätzlich kann der Öldruck auch über den zweiten Hydraulikmotor abgeleitet werden, der ihn in mechanische Bewegungs- und Reibungsenergie umsetzt.

Weiterhin wird empfohlen, die Geschwindigkeit des Reversiermotors in der zweiten und/oder dritten Betriebsart einstellbar zu gestalten. Hierzu kann ein verstellbares Drosselventil Verwendung finden, das vorzugsweise von der Fahrerkabine aus (mechanisch, hydraulisch oder elektromotorisch) verstellbar ist. Alternativ kann der Reversiermotor ein Hydraulikmotor mit einstellbarer Geschwindigkeit sein, dessen Geschwindigkeit mittels einer Taumelscheibe eingestellt wird.

Der Reversiermotor und der zweite Hydraulikmotor können in der zweiten und/oder dritten Betriebsart in Reihe geschaltet werden. Das von einer Druckquelle stammende Öl, mit dem die beiden genannten Motoren angetrieben werden, durchströmt somit zunächst den Reversiermotor und dann den zweiten Hydraulikmotor (bzw. in umgekehrter Reihenfolge). Der Vorzug liegt in der Ersparnis einer zusätzlichen Hydraulikleitung, die bei Parallelschaltung nötig wäre, und darin, daß für die erste und/oder vierte Betriebsart, in der die genannten Motoren ebenfalls in Reihe geschaltet sind, da der Reversiermotor in diesen Betriebsarten ebenfalls das Öl zum zweiten Hydraulikmotor fördert, keine Ventile zum Umschalten erforderlich sind. Im Ergebnis erhält man einen einfachen und preiswerten Hydraulikkreis.

Die Erfindung ist für jede Erntemaschine mit einer reversierbaren Förder- und/oder Gutbearbeitungsvorrichtung geeignet. Sie kann insbesondere an Feldhäckslern verwendet werden, bei denen die Förder- und/oder Gutbearbeitungsvorrichtung eine Häckseltrommel und/oder einen Körnerprozessor und/oder ein Zuführwalzenpaar aufweist. Auch für Mähdrescher ist die Erfindung geeignet, bei denen die Förder- und/oder Gutbearbeitungsvorrichtung einen Schrägförderer, vorzugsweise mit einer Förderkette, und/oder eine Erntegutaufnahmeeinrichtung (insbesondere ein Schneidwerk) aufweist. Bei Mähdreschern kann der zweite Hydraulikmotor insbesondere eine Haspel antreiben, die in der zweiten Betriebsart ebenfalls reversiert werden kann.

In den Zeichnungen ist ein nachfolgend näher beschriebenes Ausführungsbeispiel der Erfindung dargestellt. Es zeigt:
- Fig. 1: einen Mähdrescher,
- Fig. 2: eine schematische Seitenansicht einer Erntegutaufnahmeeinrichtung für den Mähdrescher der Figur 1,
- Fig. 3: eine schematische Draufsicht auf die Erntegutaufnahmeeinrichtung der Figur 2, und
- Fig. 4: einen Hydraulikschaltkreis der Antriebsorgane der Erntegutaufnahmeeinrichtung der Figur 3.

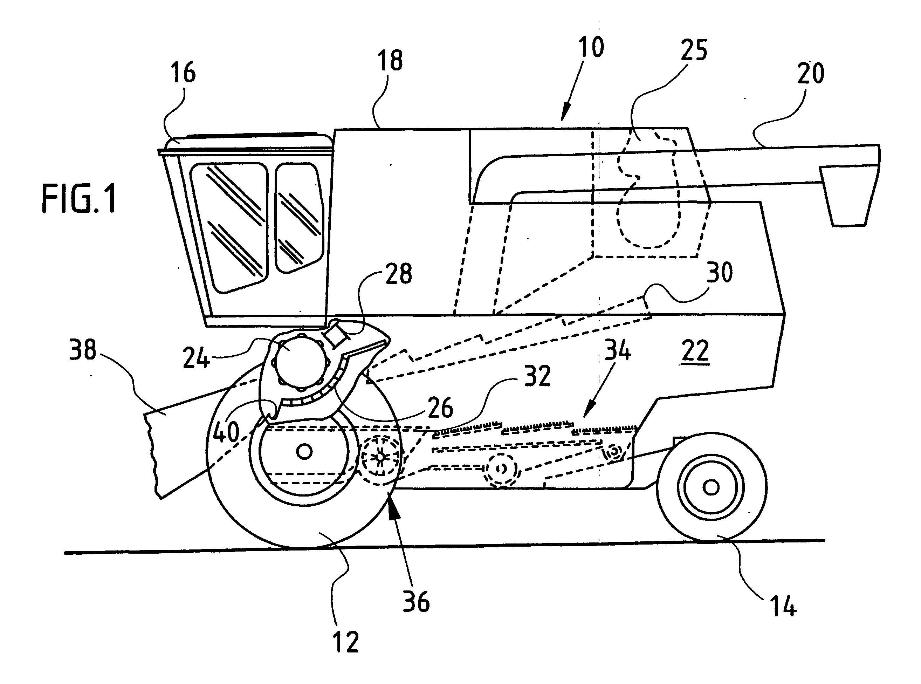

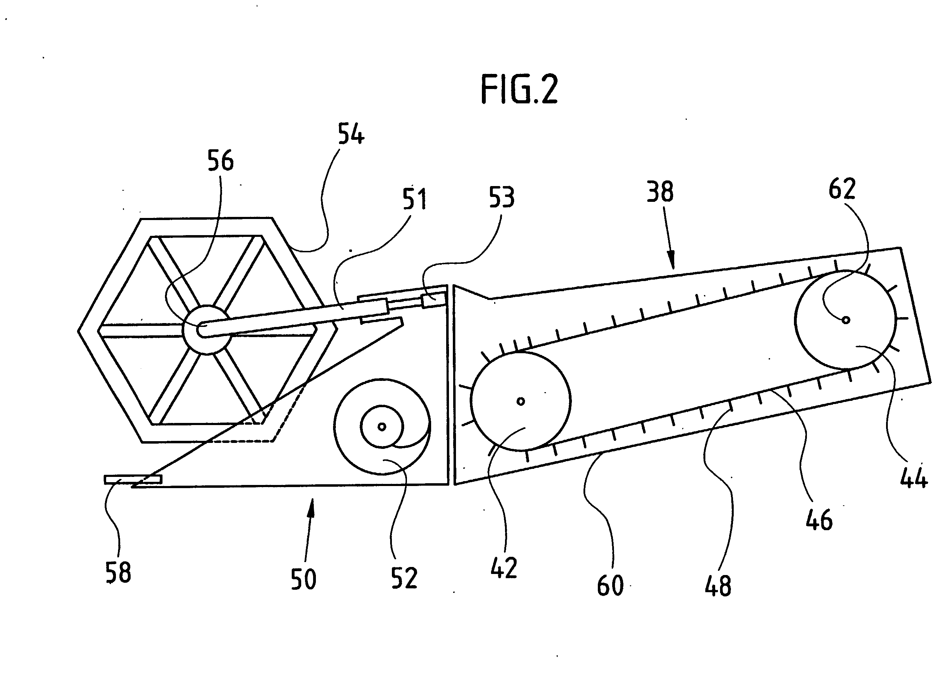

Eine in Figur 1 gezeigte Erntemaschine in der Form eines Mähdreschers 10 ist auf vorderen angetriebenen und rückwärtigen lenkbaren Rädern 12 bzw. 14 getragen und weist eine Fahrerkabine 16 auf, von der aus sie von einer Bedienungsperson bedient werden kann. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Schüttler 30 auf den Boden abgelegt werden und leichte Bestandteile mittels eines Gebläses 36 von den Sieben 34 ebenfalls auf den Boden geblasen werden. Auf dem Boden liegendes oder stehendes Gut wird über einen Schrägförderer 38 und eine Steinfangmulde 40 der Dreschtrommel 24 zugeführt, nachdem es von einer in Figur 2 gezeigten Erntegutaufnahmevorrichtung 50 vom Boden aufgenommen worden ist. Hinter dem Korntank 18 ist ein Verbrennungsmotor 25 angeordnet, der die Gutbearbeitungsvorrichtungen des Mähdreschers 10 und die Räder 12, 14 antreibt.

Die in Figur 2 wiedergegebene Erntegutaufnahmevorrichtung 50 ist an der in Vorwärtsfahrtrichtung des Mähdreschers 10 vorderen Fläche des Schrägförderers 38 lösbar befestigt, in der Regel eingehängt. Die Erntegutaufnahmeeinrichtung 50 ist mit einer Schneideinrichtung 58 zum Abtrennen von Erntegut (insbesondere Getreide) vom Erdboden ausgestattet. Das abgeschnittene Erntegut wird mittels einer im Gegenuhrzeigersinn um eine Achse 56 rotativ angetriebenen Haspel 56 einer Schnecke 52 zugeführt, die das Erntegut dem Schrägförderer 38 zuleitet. Die Haspel ist über eine Teleskopstange 51 und einen Hydraulikzylinder 53, anstelle dessen auch ein entsprechend gesteuerter Elektromotor verwendbar wäre, in ihrer Position verstellbar; sie kann mittels des Hydraulikzylinders 53 von einer normalen Betriebsstellung, in der Erntegut eingezogen wird, in eine Außerbetriebsstellung, in der verstopftes Erntegut durch Reversieren des Schrägförderers 38 und der Schnecke 52 und der Haspel 54 wieder ausgeworfen werden kann, verbracht werden. In der Außerbetriebsstellung ist die Haspel 54 weiter von der Schnecke 52 beabstandet als in der Betriebsstellung. Der Schrägförderer 38 weist ein Gehäuse 60 auf, in dem eine endlose Förderkette 46 mit Einzugsleisten 48 um eine untere Schrägfördererwalze 42 und eine obere Schrägfördererwalze 44 umläuft. Letztere wird über ihre Welle 62 rotativ angetrieben. Die Förderkette 46 mit den Einzugsleisten 48 fördert das eingebrachte Erntegut unterschlächtig in den Mähdrescher 10 hinein.

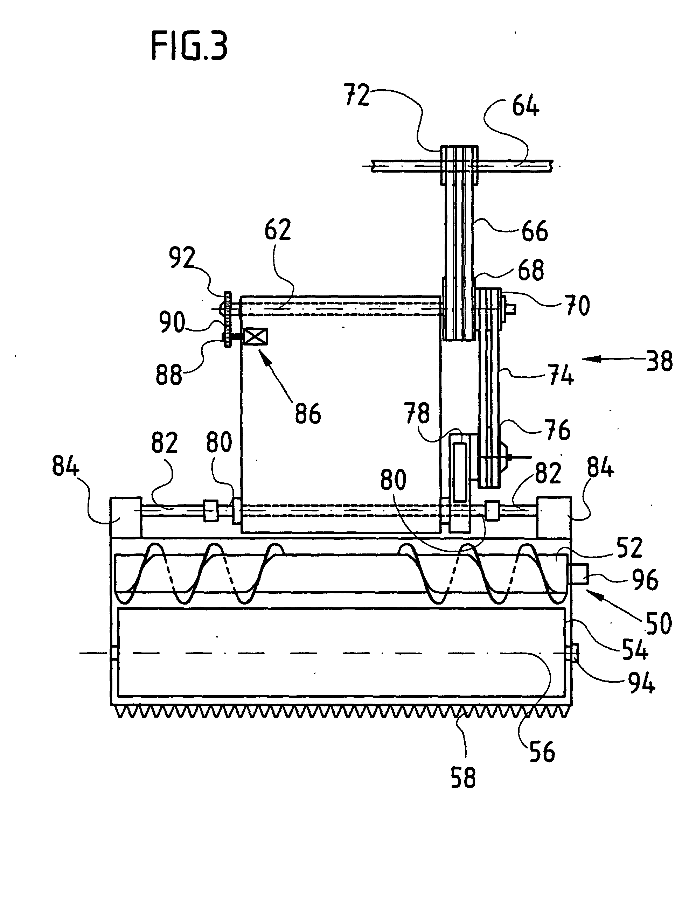

Anhand der in Figur 3 wiedergegebenen schematischen Draufsicht auf den Schrägförderer 38 und die Erntegutaufnahmeeinrichtung 50 ist der Antrieb der einzelnen Elemente erkennbar. Von dem Motor 25 des Mähdreschers 10 wird (in der Regel indirekt) eine Welle 64 angetrieben, die die Welle der Dreschtrommel 24 oder des Wendekorbs 26 sein kann. Auf der Welle 64 ist eine Riemenscheibe 72 befestigt, über die ein dreifacher Riemen 66 läuft. Die Riemenscheibe 72 ist mit einer an sich bekannten, nicht dargestellten Elektrokupplung ausgestattet, mit der die Antriebsverbindung zwischen der Welle 64 und dem Außenumfang der Riemenscheibe 72 ein- und ausschaltbar ist. Es wird also nur ein Drehmoment auf die Riemenscheibe 72 und den Riemen 66 übertragen, falls die Elektrokupplung eingeschaltet ist. Der Riemen 66 umläuft außerdem eine Riemenscheibe 68, die mit einer koaxialen Riemenscheibe 70 verbunden ist, um die ein weiterer Riemen 74 umläuft. Die Riemenscheiben 68 und 70 durchdringt die Welle 62 der oberen Schrägfördererwalze 44; sie steht mit ihnen in Antriebsverbindung. Die Welle 62 ist am den Riemenscheiben 68,70 gegenüberliegenden Ende über ein Kettenrad 92, eine Kette 90 und ein weiteres Kettenrad 88 mit einem Reversiermotor 86 verbunden. Anzumerken ist, daß die Welle 64 die Förderkette 46 des Schrägförderers 38 auch über mit der unteren Schrägfördererwalze 42 verbundene Riemenscheiben antreiben könnte, während der Reversiermotor 86 mittelbar über die obere Schrägfördererwalze 42 und die Förderkette 46 mit der unteren Schrägfördererwalze 42 in Antriebsverbindung steht. Selbstverständlich ist die Erfindung auch für jede andere Ausführungsform eines Schrägförderers 38 anwendbar.

Der Riemen 74 umläuft eine am (in Vorwärtsfahrtrichtung des Mähdreschers 10) vorderen Ende des Schrägförderers 38 positionierte Riemenscheibe 76, die ihrerseits ein Kettengetriebe 78 antreibt. Das Kettengetriebe 78 treibt Sechskantwellen 80, die beidseits des Schrägförderers 38 lösbar mit Schneidwerksantriebswellen 82 verbunden sind. Die Schneidwerksantriebswellen 82 sind über Getriebe 84 mit der Schneideinrichtung 58 verbunden. Die Achse 56 der Haspel 54 ist mittels eines Hydraulikmotors 94 antreibbar, und die Schnecke 52 ist mit einem Getriebe 96 verbunden, das mechanisch mit den Schneidwerksantriebswellen 82 in Verbindung steht.

Im normalen Erntebetrieb ist die Elektrokupplung in der Riemenscheibe 72 eingeschaltet, und der Motor des Mähdreschers 10 treibt die Welle 62 der oberen Schrägfördererwalze 44 über den Riemen 66 und die Riemenscheibe 68 an. Auch die Schneideinrichtung 38 wird durch den Motor über die - mit der Riemenscheibe 68 verbundene - Riemenscheibe 70, den Riemen 74, die Riemenscheibe 76, das Kettengetriebe 78, die Sechskantwelle 80, die Schneidwerksantriebswelle 82 und das Getriebe 84 angetrieben. Die Schnecke 52 wird durch das über die Schneidwerksantriebswelle 82 angetriebene Getriebe 96 angetrieben. Da keine weitere Elektrokupplung als die Elektrokupplung in der Riemenscheibe 72 auf der Welle 64 vorgesehen ist, besteht eine Antriebsverbindung zwischen dem Reversiermotor 86 und der Welle 62 der oberen Schrägfördererwalze 44. Der Reversiermotor 86 wird also mechanisch angetrieben und wirkt als Hydraulikölpumpe. Er ist durch eine Hydraulikölleitung mit dem Hydraulikmotor 94 der Haspel 54 verbunden, und treibt die Haspel 56 an, die in normalem Erntebetrieb in Figur 2 im Gegenuhrzeigersinn dreht.

Beim Reversierbetrieb, d. h. falls in der Erntegutaufnahmeeinrichtung 50 und/oder im Schrägförderer 38 verstopftes Erntegut auszustoßen ist, ist die Elektrokupplung in der Riemenscheibe 72 ausgeschaltet. Der Reversiermotor 86 wird dann hydraulisch beaufschlagt und treibt die Förderkette 46 des Schrägförderers 38 in umgekehrter (reversierter) Richtung an, während der Hydraulikmotor 94 ebenfalls in umgekehrter Richtung beaufschlagt wird, und verglichen mit dem normalen Erntebetrieb in umgekehrter Richtung dreht. Über das Kettengetriebe 78, die Sechskantwelle 80, die Schneidwerksantriebswelle 82 und das Getriebe 96 wird auch die Schnecke 52 in umkehrter Drehrichtung angetrieben. Auf diese Weise wird verstopftes Erntegut wieder aus dem Schrägförderer 38 und der Erntegutaufnahmeeinrichtung 50 hinaus gefördert. Die Haspel 56 kann in dieser Betriebsart durch entsprechende Beaufschlagung des Hydraulikmotors 94 ebenfalls in umgekehrter Richtung gedreht werden.

Erfindungsgemäß ist eine weitere, dritte Betriebsart vorgesehen, in der der Reversiermotor 86 ebenfalls hydraulisch beaufschlagt wird, jedoch in der dem normalen Erntebetrieb entsprechenden Richtung. In dieser Betriebsart kann nach einer Verstopfung Erntegut langsam in den Mähdrescher 10 gefördert werden, da der Kettenförderer 46 in der Richtung, in der er in normalem Erntebetrieb angetrieben wird, jedoch mit reduzierter Geschwindigkeit bewegt wird. Durch die mechanische Antriebsverbindung zwischen Schnecke 52 und Reversiermotor 86 wird in dieser Betriebsart auch die Schnecke 52.über das Getriebe 96 in normaler, nicht reversierter Drehrichtung in Rotation versetzt. Der Reversiermotor kann somit in zwei Richtungen, vorzugsweise mit veränderbarer Drehgeschwindigkeit angetrieben werden, und treibt die Einzugsorgane (Schnecke 52 und Förderkette 46) des Mähdreschers 10 entsprechend vorwärts oder rückwärts an.

In einer vierten Betriebsart, einem Notstop, dient der Reversiermotor 86 zum Abbremsen der Einzugsorgane. Da der Reversiermotor 86 im normalen Erntebetrieb als Hydraulikölpumpe verwendet wird, kann der von ihm erzeugte Hydrauliköldruck über ein Ventil, insbesondere ein Druckbegrenzerventil abgeleitet werden, um den besagten Notstop zu realisieren. In dieser Betriebsart ist die Elektokupplung in der Riemenscheibe 72 ausgeschaltet, und die durch den normalen Erntebetrieb noch vorhandene Rotationsenergie der Schnecke 52, der Förderkette 46, der unteren und oberen Schrägfördererwalze 42 und 44 sowie der Antriebselemente (Riemen 66, 74, Riemenscheiben 72, 68, 70, 76, Kettengetriebe 78, Sechskantwelle 80, Schneidwerksantriebswelle 82, Getriebe 84, 96, Kettenräder 88, 92 und Kette 90) wird durch den Reversiermotor 86 in Strömungsdruck des Hydrauliköls umgewandelt, der wiederum durch das - Ventil in Wärme umgewandelt wird. Auf diese Weise erhält man für einen Notstop eine zusätzliche, effektiv wirkende Bremse für die Einzugsorgane.

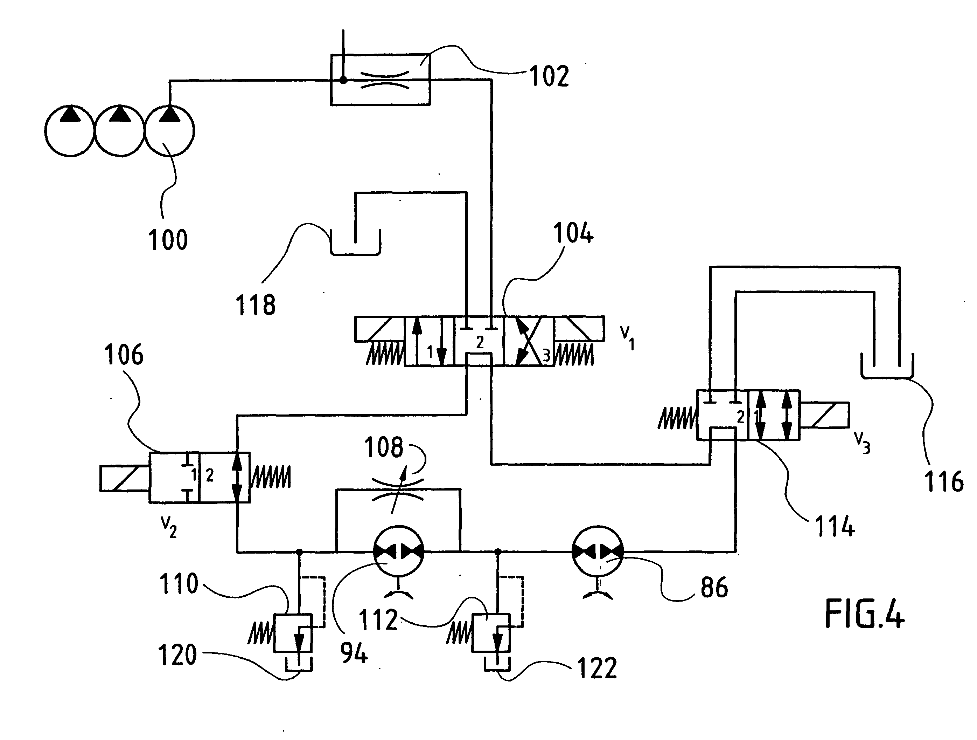

In Figur 4 ist ein erfindungsgemäßer Hydraulikschaltkreis wiedergegeben. Er enthält eine Druckquelle 100, die in der Regel eine Hydraulikpumpe des Mähdreschers 10 ist. Über ein Drosselventil 102 wird das druckbeaufschlagte Hydrauliköl von der Druckquelle 100 einem Anschluß eines ersten Ventils 104, das ein 3/2-Wege-Ventil ist, zugeführt. Im normalen Erntebetrieb ist dieser Anschluß gesperrt; das erste Ventil 104 ist dann in der in Figur 4 eingezeichneten Position 2. Ein erster, in Figur 4 links eingezeichneter Anschluß' des Hydraulikmotors 94 der Haspel 56 ist über ein Druckbegrenzerventil 110 mit einem Vorratsbehälter 120 verbunden, in dem sich Hydrauliköl befindet. Dieses Druckbegrenzerventil 110 leitet zu hohen Öldruck in den Vorratsbehälter 120 ab, ist im Normalfall aber gesperrt. Der erste Anschluß des Hydraulikmotors 94 ist außerdem mit einem Anschluß eines zweiten Ventils 106, das ein 2/1-Wege-Ventil ist, verbunden. Im normalen Erntebetrieb ist das zweite Ventil in der eingezeichneten Position 2, und der erste Anschluß des Hydraulikmotors 94 mit einem Anschluß des ersten Ventils 104 verbunden. Im Normalbetrieb stellt das erste Ventil eine Verbindung mit einem dritten Ventil 114 her, einem 2/2-Wege-Ventil, das im normalen Erntebetrieb in der Position 1 ist. In dieser Position wird Hydrauliköl in einen Vorratsbehälter 116 geleitet. Aus diesem Vorratsbehälter 116 entnimmt ein erster Anschluß des rotativ angetriebenen, als Hydraulikölpumpe wirkenden Reversiermotors 86 ebenfalls über das Ventil 114 Hydrauliköl. Ein zweiter Anschluß des Reversiermotors 86 ist mit einem zweiten Anschluß des Hydraulikmotors 94 und über ein zweites Druckbegrenzerventil 112 mit einem Vorratsbehälter 122 verbunden. Die Vorratsbehälter 116, 118, 120 und 122 können untereinander hydraulisch in Verbindung stehen oder in einem gemeinsamen Behälter realisiert sein. Ein verstellbares Drosselventil 108 ist parallel zum Hydraulikmotor 94 geschaltet. Im Ergebnis pumpt der mechanisch angetriebene Reversiermotor 86 im normalen Erntebetrieb Hydrauliköl aus dem Vorratsbehälter 116 durch den Hydraulikmotor 94, der die Haspel antreibt, in den Vorratsbehälter 116. Die Drehzahl des Hydraulikmotors 94 ist durch das Drosselventil 108 veränderbar; ist es geschlossen, strömt das gesamte Öl durch den Hydraulikmotor 94, der mit hoher Drehzahl rotiert. Ist es offen, wird der Hydraulikmotor 94 nur langsam drehen oder still stehen. Die Druckbegrenzerventile 110, 112 schützen den Reversiermotor 86 und den Hydraulikmotor 94.

Die Ventile 104, 106, 114 sind mechanisch oder elektomagnetisch in die jeweiligen Positionen verbringbar. Das kann durch geeignete Bedienungselemente (Schalter oder dergleichen) in der Fahrerkabine 16 erfolgen.

Beim Reversierbetrieb ist das erste Ventil 104 in Position 3, das zweite Ventil 106 in Position 2 und das dritte Ventil 114 in Position 2. Das von der Druckquelle 100 stammende Hydrauliköl wird dem Reversiermotor 86 über den Hydraulikmotor 94 zugeführt, und schließlich in den Vorratsbehälter 118 abgeleitet. Beide Motoren 86, 94 drehen in gegenüber dem Normalbetrieb umgekehrter Richtung. Die Drehzahl des Reversiermotors 86 ist über das verstellbare Drosselventil 108 einstellbar.

In der dritten Betriebsart, dem langsamen Einziehen des Erntegutes in den Mähdrescher 10, ist das erste Ventil 104 in Position 1, das zweite Ventil 106 in Position 2 und das dritte Ventil in Position 2. In dieser Betriebsart sind der Reversiermotor 86 und der Hydraulikmotor 94 in Reihe geschaltet, und sie werden hydraulisch in die Richtung angetrieben, in die sie auch während des normalen Erntebetriebs drehen. Die Drehzahl des Reversiermotors 86 und des Hydraulikmotors 94 kann mittels des verstellbaren Drosselventils 108 variiert werden.

In der vierten Betriebsart, dem Notstop, ist das erste Ventil 104 in der Position 2, das zweite Ventil 106 in der Position 1 und das dritte Ventil 114 in der Position 1. Der erste Anschluß des Reversiermotors 86 ist somit an dem abgesperrten Ventil V2 angeschlossen, und der durch die kinetische Energie der Einzugsorgane angetriebene Reversiermotor 86 pumpt Hydrauliköl in das zweite Druckbegrenzerventil 112, und über den Hydraulikmotor 94 und das verstellbare Drosselventil 108 in das erste Druckbegrenzerventil 110. Über beide Druckbegrenzerventile 110, 112 wird der vom Reversiermotor 86 erzeugte Öldruck in die Vorratsbehälter 120, 122 abgelassen und die kinetische Energie in Wärmeenergie umgewandelt. Außerdem entsteht am ersten Anschluß des Reversiermotors 86 ein Unterdruck oder Vakuum. Es wäre auch denkbar, das dritte Ventil 114 im Notstopbetrieb in die Position 1 zu verbringen, so daß der erste Anschluß des Reversiermotors 86 nicht abgesperrt ist, sondern Hydrauliköl aus dem Vorratsbehälter 116 entnimmt.

## Patentansprüche

1. Antriebseinrichtung einer Förder- und/oder Gutbearbeitungsvorrichtung einer Erntemaschine, mit:
einem Hauptantriebsmotor, insbesondere einem Verbrennungsmotor (25), der eingerichtet ist, die Förder- und/oder Gutbearbeitungsvorrichtung über Kraftübertragungselemente in einer ersten Betriebsart in einer ersten Richtung mit einer ersten Geschwindigkeit anzutreiben, und
einem Reversiermotor (86), der eingerichtet ist, die Förder- und/oder Gutbearbeitungsvorrichtung in einer zweiten Betriebsart mit einer zweiten Geschwindigkeit in einer zweiten Richtung, die sich von der ersten Richtung unterscheidet, anzutreiben,
**dadurch gekennzeichnet, daß** die Antriebseinrichtung in wenigstens einer der folgenden Betriebsarten betreibbar ist:
einer dritten Betriebsart, in der der Reversiermotor (86) die Förder- und/oder Gutbearbeitungsvorrichtung in der ersten Richtung mit einer dritten Geschwindigkeit antreibt, die kleiner als die erste Geschwindigkeit ist, und/oder
einer vierten Betriebsart, in der die Förder- und/oder Gutbearbeitungsvorrichtung antriebsmäßig vom Hauptantriebsmotor getrennt ist, und in der der Reversiermotor (86) als Bremse auf die Förder- und/oder Gutbearbeitungsvorrichtung wirkt.

2. Antriebseinrichtung nach Anspruch 1, **dadurch gekennzeichnet, daß** der Reversiermotor (86) auch in der ersten Betriebsart antriebsmäßig an die Förder- und/oder Gutbearbeitungsvorrichtung gekoppelt ist.

3. Antriebseinrichtung nach Anspruch 1 oder 2, **dadurch gekennzeichnet, daß** der Reversiermotor (86) ein Hydraulikmotor ist.

4. Antriebseinrichtung nach Anspruch 3, **dadurch gekennzeichnet, daß** der Reversiermotor (86) in der ersten Betriebsart als Pumpe betrieben wird und einen zweiten Hydraulikmotor (94) antreibt.

5. Antriebseinrichtung nach Anspruch 4, **dadurch gekennzeichnet, daß** die Geschwindigkeit des zweiten Hydraulikmotors (94) veränderbar ist, insbesondere durch ein vorzugsweise parallel geschaltetes Drosselventil (108).

6. Antriebseinrichtung nach einem der vorhergehenden Ansprüche, **dadurch gekennzeichnet, daß** die Förderund/oder Gutbearbeitungsvorrichtung in der zweiten und dritten Betriebsart antriebsmäßig vom Verbrennungsmotor (25) getrennt ist.

7. Antriebseinrichtung nach einem der Ansprüche 3 bis 6, **dadurch gekennzeichnet, daß** in der vierten Betriebsart der vom Reversiermotor (86) erzeugte Öldruck über ein Ventil, insbesondere ein Druckbegrenzerventil (110, 112) abgeleitet wird.

8. Antriebseinrichtung nach Anspruch 7, **dadurch gekennzeichnet, daß** in der vierten Betriebsart der vom Reversiermotor (86) erzeugte Öldruck zusätzlich über den zweiten Hydraulikmotor (94) abgeleitet wird.

9. Antriebseinrichtung nach einem der vorhergehenden Ansprüche, **dadurch gekennzeichnet, daß** die Geschwindigkeit des Reversiermotors (86) in der zweiten und/oder dritten Betriebsart veränderbar ist.

10. Antriebseinrichtung nach einem der Ansprüche 4 bis 9, **dadurch gekennzeichnet, daß** der Reversiermotor (86) und der zweite Hydraulikmotor, (94) in der zweiten und dritten Betriebsart in Reihe geschaltet sind.

11. Antriebseinrichtung nach einem der vorhergehenden Ansprüche, **dadurch gekennzeichnet, daß** die Förderund/oder Gutbearbeitungsvorrichtung einen Schrägförderer (38), vorzugsweise mit einer Förderkette (46), und/oder eine Erntegutaufnahmeeinrichtung (50), insbesondere ein Schneidwerk, oder eine Häckseltrommel und/oder einen Körnerprozessor und/oder ein Zuführwalzenpaar aufweist.

12. Antriebseinrichtung nach einem der Ansprüche 4 bis 11, **dadurch gekennzeichnet, daß** der zweite Hydraulikmotor (94) eine Haspel (54) antreibt.

13. Erntemaschine, insbesondere Mähdrescher (10) oder Feldhäcksler, mit einer Antriebseinrichtung der Förderund/oder Gutbearbeitungsvorrichtung nach einem der vorhergehenden Ansprüche.

## Claims

1. A drive device of a conveyor and/or crop processing device of a harvesting machine, with: a main drive engine, especially an internal combustion engine (25), which is arranged to drive the conveyor and/or crop processing device through power transmission elements in a first direction with a first speed in a first mode of operation, and a reversing motor (86) which, in a second mode of operation, drives the conveyor and/or crop processing device at a second speed in a second direction which is different from the first direction, **characterized in that** the drive device can be driven in at least on of the following modes of operation: a third mode of operation, in which the reversing motor (86) drives the conveyor and/or crop processing device in the first direction with a third speed, which is smaller than the first speed, and/or a fourth mode of operation, in which the conveyor and/or crop processing device is disconnected from drive by the main drive engine and in which the reversing motor (86) acts as a brake on the conveyor and/or crop processing device.

2. A drive device according to claim 1, **characterized in that** the reversing motor (86) is drivably coupled to the conveyor and/or crop processing device also in the first mode of operation.

3. A drive device according to claim 1 or 2, **characterized in that** the reversing motor (86) is a hydraulic motor.

4. A drive device according to claim 3, **characterized in that** the reversing motor (86) is operated as a pump in the first mode of operation and drives a second hydraulic motor (94).

5. A drive device according to claim 4, **characterized in that** the speed of the second hydraulic motor (94) can be varied, in particular by a throttle valve (108) preferably connected in parallel.

6. A drive device according to any of the preceding claims, **characterized in that** the conveyor and/or crop processing device is separated from drive by the internal combustion engine (25) in the second and third modes of operation.

7. A drive device according to any of claims 3 to 6, **characterized in that** the oil pressure created by the reversing motor (86) in the fourth mode of operation is drained off through a valve, especially a pressure limiting valve (110, 112).

8. A drive device according to claim 7, **characterized in that** the oil pressure created by the reversing motor (86) in the fourth mode of operation is additionally drained off through the second hydraulic motor (94).

9. A drive device according to any of the preceding claims, **characterized in that** the speed of the reversing motor (86) can be varied in the second and/or third mode of operation.

10. A drive device according to any of claims 4 to 9, **characterized in that** the reversing motor (86) and the second hydraulic motor (94) are connected in series in the second and third modes of operation.

11. A drive device according to any of the preceding claims, **characterized in that** the conveyor and/or crop processing device comprises an inclined conveyor (38), preferably with a conveyor chain (46), and/or a harvested crop receiving device (50), especially a cutter mechanism, or a chopper drum and/or a grain processor and/or a feed roller pair.

12. A drive device according to any of claims 4 to 11, **characterized in that** the second hydraulic motor (94) drives a reel (54).

13. A harvesting machine, especially a combine harvester (10) or forage harvester, with a drive device of the conveyor and/or crop processing device according to any of the preceding claims.

## Revendications

1. Ensemble d'entraînement d'un dispositif de transport et/ou de traitement de produit de récolte d'une moissonneuse, comprenant :
un moteur d'entraînement principal, notamment un moteur à combustion interne (25), qui est prévu pour entraîner le dispositif de transport et/ou de traitement de produit à l'aide d'éléments de transmission de forces dans un premier mode de fonctionnement dans un premier sens à une première vitesse, et
un moteur réversible (86), qui est prévu pour entraîner le dispositif de transport et/ou de traitement de produit dans un deuxième mode de fonctionnement à une deuxième vitesse dans un deuxième sens différent du premier sens,
**caractérisé en ce que** l'ensemble d'entraînement peut être mis en oeuvre dans au moins l'un des modes de fonctionnement suivants :
un troisième mode de fonctionnement, dans lequel le moteur réversible (86) entraîne le dispositif de transport et/ou de traitement de produit dans le premier sens à une troisième vitesse, qui est plus petite que la première vitesse, et/ou
un quatrième mode de fonctionnement, dans lequel le dispositif de transport et/ou de traitement de produit est séparé du moteur d'entraînement principal au niveau de l'entraînement, et dans lequel le moteur réversible (86) agit comme un frein sur le dispositif de transport et/ou d'entraînement.

2. Ensemble d'entraînement selon la revendication 1, **caractérisé en ce que** le moteur réversible (86) est accouplé au niveau de l'entraînement au dispositif de transport et/ou de traitement de produit également dans le premier mode de fonctionnement.

3. Ensemble d'entraînement selon la revendication 1 ou 2, **caractérisé en ce que** le moteur réversible (86) est un moteur hydraulique.

4. Ensemble d'entraînement selon la revendication 3, **caractérisé en ce que** dans le premier mode de fonctionnement le moteur réversible (86) est mis en oeuvre comme une pompe et entraîne un deuxième moteur hydraulique (94).

5. Ensemble d'entraînement selon la revendication 4, **caractérisé en ce que** la vitesse du deuxième moteur hydraulique (94) est variable, notamment à l'aide d'une soupape d'étranglement (108) de préférence monté en parallèle.

6. Ensemble d'entraînement selon l'une quelconque des revendications précédentes, **caractérisé en ce que** dans le deuxième et le troisième modes de fonctionnement le dispositif de transport et/ou de traitement de produit est séparé du moteur à combustion interne (25) au niveau de l'entraînement.

7. Ensemble d'entraînement selon l'une quelconque des revendications 3 à 6, **caractérisé en ce que** dans le quatrième mode de fonctionnement la pression d'huile générée par le moteur réversible (86) est régulée par l'intermédiaire d'une soupape, notamment une soupape de limitation de pression (110, 112).

8. Ensemble d'entraînement selon la revendication 7, **caractérisé en ce que** dans le quatrième mode de fonctionnement la pression d'huile générée par le moteur réversible (86) est en outre évacuée par l'intermédiaire du deuxième moteur hydraulique (94).

9. Ensemble d'entraînement selon l'une quelconque des revendications précédentes, **caractérisé en ce que** la vitesse du moteur réversible (86) est variable dans le deuxième et/ou le troisième mode de fonctionnement.

10. Ensemble d'entraînement selon l'une des revendications 4 à 9, **caractérisé en ce que** dans le deuxième et le troisième modes de fonctionnement le moteur réversible (86) et le deuxième moteur hydraulique (94) sont montés en série.

11. Ensemble d'entraînement selon l'une quelconque des revendications précédentes, **caractérisé en ce que** le dispositif de transport et/ou de traitement de produit présente un transporteur incliné (38) comprenant de préférence une chaîne de transport (46), et/ou un ensemble de réception de produit récolté (50), notamment un mécanisme de coupe ou une hacheuse et/ou un processeur à grains et/ou une paire de cylindres d'amenée.

12. Ensemble d'entraînement selon l'une des revendications 4 à 11, **caractérisé en ce que** le moteur hydraulique (94) entraîne un rabatteur (54).

13. Moissonneuse, notamment moissonneuse-batteuse (10) ou ramasseuse-hacheuse, comprenant un ensemble d'entraînement du dispositif de transport et/ou de traitement de produit selon l'une des revendications précédentes.
